# EUROPEAN PATENT APPLICATION

(11) **EP 4 765 387 A1**
(43) Date of publication of application: **24.06.2026**
(21) Application number: 24914575.6
(22) Date of filing: 03.01.2024
(51) Int. Cl.: H01M 50/202, H01M 10/6556, H01M 10/6568

(54) **BATTERY AND ELECTRIC DEVICE**

(71) Applicant: Contemporary Amperex Technology Co., Limited, Ningde, Fujian 352100 (CN)
(72) Inventor: WANG, Zengzhong, Ningde, Fujian 352100 (CN); YUAN, Shenggang, Ningde, Fujian 352100 (CN); WANG, Peng, Ningde, Fujian 352100 (CN); JIA, Jun, Ningde, Fujian 352100 (CN); NIU, Jianxin, Ningde, Fujian 352100 (CN)
(74) Representative: Lorenz Seidler Gossel Part. mbB
(86) International application number: PCT/CN2024/070408
(87) International publication number: WO 2025/145342

(57) **Abstract**

The present application discloses a battery and an electric device. The battery comprises a case, a heat exchange assembly, and at least one battery cell; the case comprises a plurality of first side beams, and the plurality of first side beams are connected to define a first accommodating cavity; the at least one battery cell is located in the first accommodating cavity; the heat exchange assembly is located in the first accommodating cavity, and comprises at least one heat exchange piece used for exchanging heat with the battery cell; and an accommodating slot is formed in at least one first side beam, and the at least one heat exchange piece is at least partially accommodated in the accommodating slot. In this way, the internal space of the case is saved, the space utilization rate of the battery is improved, and the structural compactness of the battery is improved, thereby improving the volumetric energy density of the battery.

## Description

### TECHNICAL FIELD

The present application relates to the technical field of batteries, and in particular, to a battery and an electric device.

### BACKGROUND

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

In the related art, to improve the performance of an electric vehicle, the electric vehicle has put forward a strict limitation on the volume of the battery. However, the maximum range per charge of the electric vehicle mainly depends on the energy density of the battery, which refers to the amount of energy released per unit volume of the battery on average. With the increasing requirements for the driving range of the electric vehicle, how to improve the volumetric energy density of the battery remains an issue to be solved.

The above statements are only used to provide background information related to the present application and do not necessarily constitute the prior art.

### SUMMARY

An objective of embodiments of the present application is to provide a battery and an electric device, such that the volumetric energy density of the battery can be improved.

The technical solutions used in the embodiments of the present application are as follows:
In a first aspect, a battery is provided. The battery includes a case, a heat exchange assembly, and at least one battery cell. The case includes a plurality of first side beams, and the plurality of first side beams are connected and define, in an enclosing manner, a first accommodating cavity; the at least one battery cell is located in the first accommodating cavity; the heat exchange assembly is located in the first accommodating cavity, and the heat exchange assembly includes at least one heat exchange member configured to exchange heat with the battery cell; at least one first side beam is provided with an accommodating groove, and the at least one heat exchange member is at least partially accommodated in the accommodating groove.

In the battery according to the embodiments of the present application, the battery cell and the heat exchange assembly are located in the first accommodating cavity defined, in an enclosing manner, by the plurality of first side beams of the case. The heat exchange member of the heat exchange assembly can exchange heat with the battery cell, thereby achieving the heat exchange of the battery cell. In addition, the at least one heat exchange member is at least partially accommodated in the accommodating groove of the first side beam, which can save the internal space of the case, help improve the space utilization rate of the battery, and improve the structural compactness of the battery, thereby improving the volumetric energy density of the battery.

In some embodiments, a surface of the first side beam facing the heat exchange member is recessed in a direction facing away from the heat exchange member to form the accommodating groove.

By adopting the technical solution of the embodiments, the surface of the first side beam is recessed to form the accommodating groove, such that the accommodating groove is provided with a groove bottom wall, and the first side beam exhibits good structural strength, thereby improving the structural strength of the battery. In addition, the accommodating groove uses and adopts a recessed manner, which simplifies the manufacturing method, thereby facilitating the utilization of the internal space of the first side beam, saving the internal space of the battery, and improving the volumetric energy density of the battery.

In some embodiments, the accommodating groove penetrates through the first side beam in a height direction of the first side beam; or one end of the accommodating groove in the height direction of the first side beam is provided with a groove opening configured to allow the heat exchange member to be inserted into the accommodating groove, and another end of the accommodating groove in the height direction of the first side beam is provided with a supporting surface configured to support the heat exchange member.

By adopting the technical solution of the embodiments, the heat exchange member can be inserted into the accommodating groove from the groove opening at one end of the accommodating groove, and the assembly operation of the heat exchange member and the first side beam is simple, thereby helping improve the production efficiency of the battery.

In some embodiments, the surface of the first side beam facing the heat exchange member is provided with a reinforcing rib, and the accommodating groove is at least partially disposed on the reinforcing rib.

By adopting the technical solution of the embodiments, the reinforcing rib can enhance the structural strength of the first side beam, thereby improving the structural strength of the case and thus improving the structural strength and the use reliability of the battery.

In some embodiments, a groove depth of the accommodating groove is t₁, and a beam thickness of the first side beam is t₂, where 0 < t₁/t₂ ≤ 2/3.

By adopting the technical solution of the embodiments, with the design of 0 < t₁/t₂ ≤ 2/3, the groove depth of the accommodating groove is not designed to be too large, such that the first side beam exhibits good structural strength.

In some embodiments, 0.2 ≤ t₁/t₂ ≤ 0.5.

By adopting the technical solution of the embodiments, the design of 0.2 ≤ t₁/t₂ ≤ 0.5 enables the heat exchange member to be inserted into the first side beam to a certain depth, which has a good effect of saving the internal space of the battery. In addition, the groove depth of the accommodating groove is reasonable, thereby enabling the first side beam to better achieve both the space utilization rate inside the battery and the structural strength of the first side beam.

In some embodiments, the heat exchange member includes a manifold and a heat exchange main body configured to exchange heat with the battery cell; in a first direction, one end of the heat exchange main body is connected to the manifold; a plurality of first heat exchange channels are disposed inside the heat exchange main body, and the manifold is provided with a communication channel configured to be in communication with the plurality of first heat exchange channels; the manifold is at least partially accommodated in the accommodating groove.

By adopting the technical solution of the embodiments, the plurality of first heat exchange channels are disposed inside the heat exchange main body, thereby helping improve the heat exchange effect of the heat exchange member and improve the charging and discharging performance of the battery. In addition, the manifold has a simple structure, and the accommodating groove may also adopt a relatively simple structure, thereby helping simplify the structure of the case. The operation of inserting the manifold into the accommodating groove is simple, thereby helping reduce the manufacturing cost of the battery.

In some embodiments, a groove width of the accommodating groove is L, and a thickness of the manifold is t₃, wherein 1 ≤ L/t₃ ≤ 5.

By adopting the technical solution of the embodiments, the design of 1 ≤ L/t₃ ≤ 5 enables the manifold to be smoothly placed into the accommodating groove, such that on the basis of achieving the objective of saving space, the first side beam can also exhibit good structural strength, thereby enabling the battery to achieve both the volumetric energy density and the use reliability of the battery.

In some embodiments, 1.2 ≤ L/t₃ ≤ 2.

By adopting the technical solution of the embodiments, the design of 1.2 ≤ L/t₃ ≤ 2 enables the manifold to be more smoothly inserted into the accommodating groove, such that on the basis of achieving the objective of saving space, the first side beam can also exhibit good structural strength, thereby enabling the battery to better achieve both the volumetric energy density and the use reliability of the battery.

In some embodiments, the heat exchange assembly includes a connecting pipe member and a plurality of heat exchange members, and the plurality of heat exchange members are arranged in a second direction; in the first direction, the connecting pipe member is connected between end parts of two adjacent heat exchange members distal to the manifold, thereby enabling communication between two adjacent first heat exchange channels, where the first direction intersects with the second direction.

By adopting the technical solution of the embodiments, the manifold and the connecting pipe member are located on the two opposite sides of the heat exchange assembly, respectively, and the manifold and the connecting pipe member are arranged separately, thereby facilitating the insertion of the manifold into the accommodating groove and enabling the assembly operation of the heat exchange assembly and the first side beam to be simpler and more convenient.

In some embodiments, a surface of the battery cell with a largest area is a first surface, and the first surface is configured to abut against the heat exchange main body.

By adopting the technical solution of the embodiments, the first surface is the surface with the largest area of the battery cell, and the first surface abuts against the heat exchange main body. Due to the large areas of the battery cell and the heat exchange main body, the heat exchange effect of the battery cell is good, such that the temperature control effect of the battery cell is good, and the charging and discharging effect of the battery is good. In the case that the battery is under high-rate charge-discharge and high-temperature charging operating conditions, the temperature of the battery cell can be maintained within a suitable operating range, thereby improving the use reliability of the battery under these operating conditions.

In some embodiments, there are a plurality of battery cells, the plurality of battery cells are divided into at least one column of battery cells, and the battery cells in each column of the battery cells are arranged in the first direction; the at least one column of the battery cells is disposed between the two adjacent heat exchange members.

By adopting the technical solution of the embodiments, the at least one column of the battery cells is disposed between the two adjacent heat exchange members, and the battery cells in each column of the battery cells are arranged in the first direction, such that the battery cells in each column of the battery cells can better exchange heat with the heat exchange main body, and the heat exchange effect of the battery cells is good, thereby helping improve the charging and discharging performance of the battery.

In some embodiments, the surface of the battery cell with the largest area is the first surface, and the first surface of the at least one battery cell is disposed facing one of the first side beams.

By adopting the technical solution of the embodiments, in the case that the first side beam disposed opposite to the first surface of the battery cell is impacted, the first surface of the battery cell is subjected to the impact, and the allowable degree of deformation of the first surface of the battery cell is larger than that of other surfaces, such that the risk of short circuit due to the compressional deformation of the battery cell is relatively low, thereby improving the use reliability of the battery under the side impact operating condition.

In some embodiments, the surface of the battery cell with the largest area is the first surface, and the first surface of the at least one battery cell adjacent to the first side beam abuts against the corresponding first side beam.

By adopting the technical solution of the embodiments, during the charging and discharging of the battery cell, the first surface of the battery cell exhibits the greatest degree of expansion, and the first surface abuts against the first side beam, such that the first side beam can be used to limit the expansion of the first surface, thereby improving the charging and discharging performance of the battery cell and thus improving the charging and discharging performance of the battery.

In some embodiments, the first side beam abutting against the first surface of the battery cell is provided with a mounting structure configured to achieve mounting of the battery.

By adopting the technical solution of the embodiments, the first side beam provided with the mounting structure exhibits good structural strength, such that the first side beam provided with the mounting structure can effectively limit the expansion and deformation of the battery cell. As a result, an expansion beam and an anti-expansion tie bar in the case can be eliminated, thereby reducing the manufacturing cost of the case and improving the volumetric energy density of the battery.

In some embodiments, the case further includes a second side beam, and one first side beam of the plurality of first side beams is a reinforcing beam; the first side beams other than the reinforcing beam and the second side beam are connected end to end and define, in an enclosing manner, an accommodating space, and the reinforcing beam is located in the accommodating space and divides the accommodating space into the first accommodating cavity and a second accommodating cavity.

By adopting the technical solution of the embodiments, the arrangement of the reinforcing beam can enhance the structural strength of the case, thereby helping improve the use reliability of the battery. The first accommodating cavity is configured to accommodate the battery cell, and the second accommodating cavity can accommodate other components of the battery. The battery cell can be separated from other components by the reinforcing beam, which can reduce the risk of damage and short circuit of the battery cell due to interference between other components and the battery cell, thereby being more beneficial for improving the use reliability of the battery. The case adopts the structural forms of the first side beam, the reinforcing beam, and the second side beam. This structure is simple and reliable, and allows for the elimination of horizontal and vertical beams inside the case, so as to provide more space for mounting the battery cell, thereby helping improve the volumetric energy density of the battery.

In some embodiments, the reinforcing beam is provided with the accommodating groove.

By adopting the technical solution of the embodiments, the accommodating groove is disposed on the reinforcing beam in the case, the first side beam of the case facing the outside of the battery may not be provided with the accommodating groove, and the accommodating groove is disposed on the reinforcing beam, which has little influence on the structural strength of the case, such that the case exhibits good structural strength, and the use reliability of the battery is good.

In some embodiments, the battery further includes a control device configured to control the battery cell, and the control device is located in the second accommodating cavity.

By adopting the technical solution of the embodiments, the control device is the second accommodating cavity, and the battery cell and the control device are separated by the reinforcing beam. This can reduce the mutual influence between the battery cell and the control device, thereby helping improve the use reliability of the battery.

In some embodiments, the case further includes a covering plate. The covering plate is located on one side of the first side beam and closes an opening on one side of the first accommodating cavity.

By adopting the technical solution of the embodiments, the covering plate closes the opening on one side of the first accommodating cavity, which can reduce the influence of external components on the battery cell, thereby helping improve the use reliability of the battery cell and improving the use reliability of the battery.

In some embodiments, the covering plate is a heat exchange plate configured to exchange heat with the battery cell.

By adopting the technical solution of the embodiments, the covering plate is the heat exchange plate, and the heat exchange plate may also exchange heat with the battery cell, such that the heat exchange assembly and the covering plate can exchange heat simultaneously with the battery cell. The heat exchange area of the battery cell is large, such that the heat exchange effect of the battery cell is good, and the charging and discharging performance of the battery is good.

In some embodiments, the case further includes a case cover. The case cover is located on the other side of the first side beam and closes an opening on the other side of the first accommodating cavity.

By adopting the technical solution of the embodiments, the case cover and the covering plate can close the openings on the two opposite sides of the first accommodating cavity, thereby improving the sealing performance of the case and helping improve the use reliability and the service life of the battery.

In a second aspect, an electric device is provided. The electric device includes the battery according to the above embodiments.

In the electric device according to the embodiments of the present application, the above battery is used. The volumetric energy density of the battery is large, thereby helping improve the endurance capability and the space utilization rate of the electric device.

In some embodiments, the electric device is a vehicle, a surface of a battery cell with the largest area is a first surface, and the first surface is disposed facing a door of the vehicle.

By adopting the technical solution of the embodiments, the first surface is the surface of the battery cell with the largest area, and the first surface is disposed facing the door of the vehicle, such that when the vehicle experiences a side-pillar collision or a side compression, the first surface is subjected to deformation. Since the first surface allows a significantly greater intrusion than other surfaces of the battery cell, the risk of short circuit due to the compressional deformation of the battery cell is relatively low, thereby greatly improving the safety of the battery under side-pillar collision and side compression operating conditions.

In some embodiments, the electric device is the vehicle, a heat exchange assembly includes a plurality of heat exchange members and a connecting pipe member, and the heat exchange member includes a manifold and a heat exchange main body configured to exchange heat with the battery cell; in a first direction, one end of the heat exchange main body is connected to the manifold; a plurality of first heat exchange channels are disposed inside the heat exchange main body, and the manifold is provided with a communication channel configured to be in communication with the plurality of first heat exchange channels; the plurality of heat exchange members are arranged in a second direction; in the first direction, the connecting pipe member is connected between end parts of two adjacent heat exchange members distal to the manifold, thereby enabling communication between two adjacent first heat exchange channels; the first direction is parallel to a length direction of the vehicle, where the first direction intersects with the second direction.

By adopting the technical solution of the embodiments, the manifold and the connecting assembly are distributed in the length direction of the vehicle, and in the case that the vehicle experiences a side-pillar collision or a side compression, the risk of damage to the manifold and the connecting pipe member is low, and the risk of liquid leakage is low, thereby effectively reducing the risk of safety accidents and effectively improving the use reliability of the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic structural diagram of a battery cell according to some embodiments of the present application;
FIG. 4 is a schematic structural diagram of the battery shown in FIG. 2 with a case cover removed;
FIG. 5 is a partially enlarged view of the portion A in FIG. 4;
FIG. 6 is a schematic structural diagram of a first side beam according to some embodiments of the present application;
FIG. 7 is a schematic structural diagram of a first side beam according to some other embodiments of the present application;
FIG. 8 is a schematic structural diagram of a first side beam according to yet some other embodiments of the present application;
FIG. 9 is a schematic structural diagram of a heat exchange assembly according to some embodiments of the present application;
FIG. 10 is a partially enlarged view of the portion C in FIG. 9;
FIG. 11 is a cross-sectional view along the line B-B in FIG. 4;
FIG. 12 is a partially enlarged view of the portion D in FIG. 11;
FIG. 13 is a partially enlarged view of the portion E in FIG. 11; and
FIG. 14 is a schematic exploded diagram of a battery according to some other embodiments of the present application.

Reference numerals in the drawings have the following meanings:
1000: vehicle; 1100: battery; 1200: controller; 1300: motor; 10: case; 11: case cover; 12: lower case body; 121: first side beam; 1211: accommodating groove; 1212: reinforcing rib; 1213: mounting structure; 1214: groove opening; 122: second side beam; 123: reinforcing beam; 124: covering plate; 125: heat exchange plate; 1251: second heat exchange channel; 101: accommodating space; 1011: first accommodating cavity; 1012: second accommodating cavity; 20: battery cell; 21: first surface; 22: first end surface; 23: first side surface; 24: second side surface; 30: heat exchange assembly; 31: heat exchange member; 311: manifold; 312: heat exchange main body; 3121: first heat exchange channel; 32: connecting pipe member; 33: inflow pipe; 34: outflow pipe; 40: control device; 50: busbar component.

### DETAILED DESCRIPTION

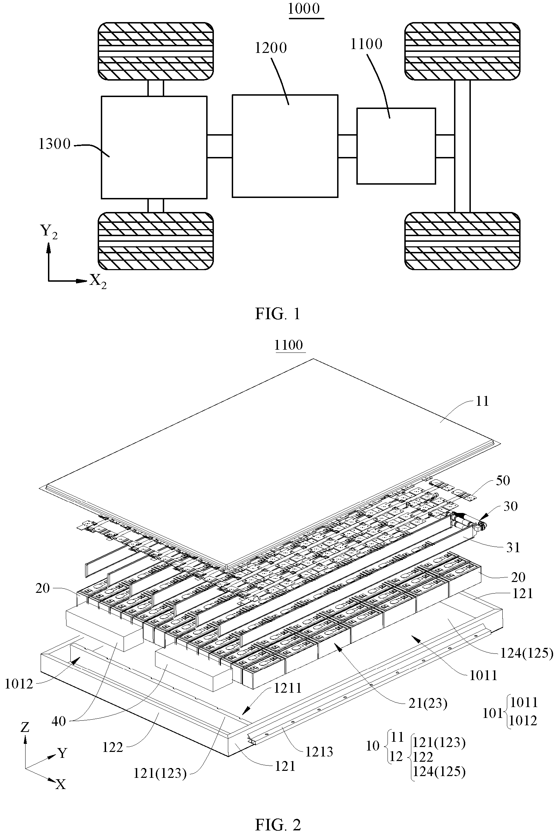

In order to make the technical problems, the technical solutions and the beneficial effects of the present application more apparent, the present application is further described in detail below with reference to FIGs. 1 to 14 and embodiments. It should be understood that the specific embodiments described herein are merely illustrative of the present application and do not limit the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. Therefore, a feature defined with "first" or "second" may explicitly or implicitly include one or more such features.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein may be combined with other embodiments in any suitable manner.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces. The meaning of "several" is one or more, unless otherwise specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, when an element is referred to as being "fixed to" or "disposed on" another element, it may be directly on or indirectly on the other element. When an element is referred to as being "connected to" another element, it may be directly connected to the other element or indirectly connected to the other element.

In the present application, battery cells may include lithium-ion secondary batteries, lithium-ion primary batteries, lithium-sulfur batteries, sodium-lithium-ion batteries, sodium-ion batteries, lithium metal batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. The battery generally includes a case configured to encapsulate one or a plurality of battery cells. The case can, to a certain extent, prevent liquid or other foreign matter from affecting the charging or discharging of the battery cells.

If a plurality of battery cells are provided in a battery, the plurality of battery cells may be connected in series, in parallel, or in series-parallel. The series-parallel connection means that both series connection and parallel connection are present for the connection of the plurality of battery cells. The plurality of battery cells may be directly connected in series, in parallel, or in series-parallel, and then the whole formed by the plurality of battery cells is accommodated in the case. Certainly, the situation may be that in the battery, the plurality of battery cells are first connected in series, in parallel, or in series-parallel to form battery modules, and then the plurality of battery modules are connected in series, in parallel, or in series-parallel to form a whole and accommodated in the case. The battery may further include other structures. For example, the battery may further include a busbar component for achieving an electrical connection among the plurality of battery cells.

The battery cell in the embodiments of the present application includes an electrode assembly and a housing, and the electrode assembly is mounted in the housing, thus protecting the electrode assembly through the housing.

The electrode assembly is also referred to as a cell, and the electrode assembly is composed of a positive electrode plate, a negative electrode plate, and a separator. The electrode assembly primarily operates by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The portion of the positive electrode current collector that is not coated with the positive electrode active substance layer protrudes from the portion of the positive electrode current collector that is coated with the positive electrode active substance layer, and the portion that is not coated with the positive electrode active substance layer serves as a positive electrode tab, or a metal conductor is welded to the positive electrode current collector and led out to serve as the positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The portion of the negative electrode current collector that is not coated with the negative electrode active substance layer protrudes from the portion of the negative electrode current collector that is coated with the negative electrode active substance layer, and the portion that is not coated with the negative electrode active substance layer serves as a negative electrode tab, or a metal conductor is welded to the negative electrode current collector and led out to serve as the negative electrode tab. The material of the negative electrode current collector may be copper, and the negative electrode active substance may be carbon, silicon, or the like. To ensure, to a certain extent, the passing of a large current without fusing, there are a plurality of positive electrode tabs that are stacked together, and there are a plurality of negative electrode tabs that are stacked together. It can be understood that in the electrode assembly, there may be one positive electrode tab, and there may also be one negative electrode tab. That is, the electrode assembly is provided with two groups of tabs, each group includes at least one tab, one group of tabs is positive electrode tabs, and the other group of tabs is negative electrode tabs.

The electrode assembly may be of a wound structure or a stacked structure. The embodiments of the present application are not limited thereto. For a wound structure, generally tabs are welded to current collectors, and components are then arranged in the sequence of positive electrode plate-separator-negative electrode plate-separator, and then winding is performed to obtain a cylindrical or prismatic cell. For a stacked structure, generally, tabs are led out from current collectors, and the positive electrode plate, the negative electrode plate, and the separator are arranged in the sequence of positive electrode plate-separator-negative electrode plate-separator, and are stacked layer by layer to form a stacked cell, where the separator may be cut into separator pieces for direct stacking, or the separator may be folded in a Z-shape without being cut. The material of the separator may be polypropylene (PP), polyethylene (PE), or the like. The separator is an insulating film disposed between the positive electrode plate and the negative electrode plate, and its main function is to isolate the positive electrode and the negative electrode and prevent electrons in the battery from passing freely, so as to prevent short circuits to a certain extent, thus enabling ions in the electrolytic solution to pass freely between the positive electrode and the negative electrode to form a circuit between the positive electrode and the negative electrode. The positive electrode plate and the negative electrode plate are collectively referred to as an electrode plate. The positive electrode tab and the negative electrode tab are collectively referred to as a tab.

The housing refers to a shell structure having a space therein to accommodate and protect the electrode assembly. The housing may be made of a material with a certain hardness and strength, such that the housing is not easy to deform when being compressed and collided, thereby enabling the battery cell to have higher structural strength and improved reliability. The housing may be made of various materials, including but not limited to copper, iron, aluminum, stainless steel, aluminum alloy, plastic, and the like.

The housing of the battery cell is provided with an electrode terminal. The electrode terminal refers to a conductive member disposed on the housing, and the electrode terminal is connected to the tabs of the electrode assembly to output electric energy of the battery cell or charge the battery cell. The battery cell generally has two electrode terminals, and the two electrode terminals are respectively connected to positive and negative electrode tabs of the electrode assembly. The electrode terminal connected to the positive electrode tab is a positive electrode terminal, and the electrode terminal connected to the negative electrode tab is a negative electrode terminal. The electrode assembly is connected to the electrode terminals to form a battery cell.

When a battery cell is charged, the current converts electric energy into chemical energy through a chemical reaction between an electrolyte and electrodes and the chemical energy is stored in the battery cell. During discharging, chemical energy is converted into electrical energy for release. This energy conversion process is accompanied by energy loss and heat generation. If the internal heat dissipation of the battery cell is poor and the heat cannot be effectively dissipated, the battery cell will be overheated. There is a certain internal resistance inside the battery cell, and a resistance loss will be generated when a current passes through the internal resistance, resulting in heat generation inside the battery cell. When the current is too large or the internal resistance is too high, the heating inside the battery cell will be intensified, resulting in overheating of the battery cell. If the designed maximum voltage is exceeded during the charging of the battery cell or the battery cell's voltage drops to an excessively low level during discharging, overvoltage or overdischarging of the battery cell will be caused. Overcharging or overdischarging will cause uncontrolled chemical reactions inside the battery cell, generating excessive heat and resulting in overheating of the battery cell. In addition, there may be defects in the design or manufacturing process of the battery cell, such as improper material selection and poor battery cell assembly. These defects may lead to poor heat dissipation or uneven current distribution inside the battery cell, thereby increasing the risk of overheating or overvoltage of the battery cell. Therefore, the battery cell may be subjected to overheating or overvoltage during charging or use.

The battery cell generally contains a certain amount of gas. When the battery cell is charged or discharged, gas generation or absorption reactions occur in the solution in the electrolyte. The generation of these gases will cause an increase in gas pressure inside the battery cell, resulting in expansion and deformation of the battery cell. During the charging or discharging of the battery cell, the positive and negative electrode materials will react chemically to form new compounds. These chemical reactions are accompanied by a change in volume, resulting in a change in the volume of the material inside the battery cell, causing the battery to expand and deform. When the battery cell is overcharged or overdischarged, the chemical reaction inside the battery cell is out of control, such that excessive gas is generated or the structure of the electrode material is damaged, thereby causing the expansion and deformation of the battery cell. The charging or discharging of the battery cell in a high-temperature environment will accelerate the internal chemical reaction, thereby intensifying gas generation and volume change. The high temperature may also cause expansion of internal substances of the battery cell, and also result in expansion and deformation of the battery cell.

To reduce the risk of explosion or fire caused by overheating or overvoltage of the battery cell during charging or use, pressure relief mechanisms such as anti-explosion valves and anti-explosion sheets are often provided on the housing of the battery cell, such that when the temperature or pressure of the battery cell exceeds a safety threshold, the gas or liquid inside the battery cell can be released to reduce the pressure inside the battery cell and reduce the risk of explosion of the battery cell. In this way, the safety performance of the battery cell can be improved, and potential safety risks can be reduced.

In the related art, to improve the performance of an electric vehicle, the electric vehicle has put forward a strict limitation on the volume of the battery. However, the maximum range per charge of the electric vehicle mainly depends on the volumetric energy density of the battery, which refers to the amount of energy released per unit volume of the battery on average. With the increasing requirements for the driving range of the electric vehicle, how to improve the volumetric energy density of the battery remains an issue to be solved. The battery generally includes a battery cell, a heat exchange assembly, and a case. The battery cell and the heat exchange assembly are mounted in the case to manufacture the battery. However, the internal structure of the battery is not compact, which is one of the reasons for the low volumetric energy density of the battery.

Based on this, in the battery according to the embodiments of the present application, a first side beam of a case of the battery is provided with an accommodating groove, and a heat exchange member of the heat exchange assembly is at least partially accommodated in the accommodating groove, which can save the internal space of the battery, thereby improving the space utilization rate inside the battery, improving the compactness of the internal structure of the battery, and improving the volumetric energy density of the battery.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The spacecraft includes an airplane, a rocket, a space shuttle, a spaceship, and the like; the electric toy includes a stationary or mobile electric toy, such as a game console, an electric car toy, an electric ship toy, and an electric aircraft toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application. The battery may also be an energy storage device. The energy storage device includes an energy storage container, an energy storage electrical cabinet, and the like.

For ease of explanation, the following embodiments will be described by taking a vehicle as an example of the electric device.

Referring to FIG. 1, FIG. 1 is a schematic structural diagram of a vehicle 1000 according to some embodiments of the present application.

The vehicle 1000 may be a fuel vehicle, a gas vehicle, or a new energy vehicle. The new energy vehicle may be a pure electric vehicle, a hybrid vehicle, an extended-range vehicle, or the like. A battery 1100 is disposed inside the vehicle 1000, and the battery 1100 may be disposed at the bottom, head, or tail of the vehicle 1000. The battery 1100 may be configured to power the vehicle 1000. For example, the battery 1100 may serve as an operation power source for the vehicle 1000. The vehicle 1000 may further include a controller 1200 and a motor 1300. The controller 1200 is configured to control the battery 1100 to power the motor 1300, e.g., for the operation power needed by the vehicle 1000 for start-up, navigation, and driving.

In some embodiments of the present application, the battery 1100 may not only serve as an operation power source for the vehicle 1000, but also as a driving power source for the vehicle 1000 to, instead of or in part instead of fuel or natural gas, provide driving power for the vehicle 1000.

To meet different power usage requirements, the battery 1100 may include a plurality of battery cells 20. The plurality of battery cells 20 may be connected in series, in parallel, or in series-parallel. The series-parallel connection refers to a mixture of series connection and parallel connection. The battery 1100 may also be referred to as a battery pack. Optionally, the plurality of battery cells 20 may be first connected in series, in parallel, or in series-parallel to form a battery module, and then a plurality of battery modules are connected in series, in parallel, or in series-parallel to form the battery 1100. That is, the plurality of battery cells 20 may be directly assembled into the battery 1100, or may be first assembled into battery 1100 modules, which are then assembled into the battery 1100.

The battery 1100 further includes a case 10 configured to encapsulate one or a plurality of battery cells 20. The case 10 can, to a certain extent, prevent liquid or other foreign matter from affecting the charging or discharging of the battery cells 20.

Referring to FIG. 2, FIG. 2 is a schematic diagram of an exploded structure of a battery 1100 according to some embodiments of the present application. The battery 1100 has a height direction, a length direction, and a width direction. The height direction of the battery 1100 may refer to a Z direction, the width direction of the battery 1100 may refer to an X direction, and the length direction of the battery 1100 may refer to a Y direction. The length of the battery 1100 may be longer or shorter than the width. The case 10 defines an outline structure of the battery 1100. The height direction of the case 10 is the height direction of the battery 1100, the length direction of the case 10 is the length direction of the battery 1100, and the width direction of the case 10 is the width direction of the battery 1100.

For ease of understanding and description, only a rectangular parallelepiped battery cell is illustrated in the embodiments according to the present application. It should be understood that the embodiments according to the present application are also applicable to a cylinder battery cell or pouch battery cell. This is not limited in the embodiments of the present application.

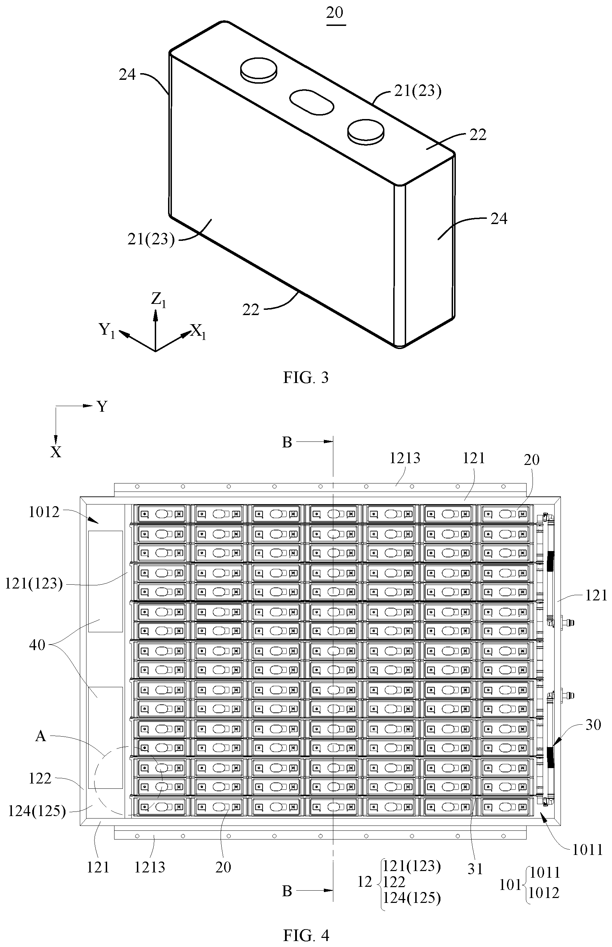

Referring to FIG. 3, FIG. 3 is a schematic structural diagram of a battery cell 20 according to some embodiments of the present application.

The battery cell 20 also has a height direction, a length direction, and a width direction. The height direction of the battery cell 20 may refer to a Z₁ direction, the width direction of the battery cell 20 may refer to an X₁ direction, and the length direction of the battery cell 20 may refer to a Y₁ direction. The battery cell 20 includes two first end surfaces 22 distributed in the height direction thereof, and the height of the battery cell 20 is defined between the two first end surfaces 22. The battery cell 20 includes two first side surfaces 23 distributed in a thickness direction thereof and two second side surfaces 24 distributed in the length direction thereof, the width of the battery cell 20 is defined between the two first side surfaces 23, and the length of the battery cell 20 is defined between the two second side surfaces 24. The area of the two first end surfaces 22 is defined by the length and width of the battery cell 20, the area of the first side surface 23 is defined by the height and length of the battery cell 20, and the area of the second side surface 24 is defined by the height and width of the battery cell 20. For a flat battery cell 20, such as a prismatic battery cell, its width is smaller than its length and height, and its first side surface 23 has the largest area, so the first side surface 23 is also referred to as a large surface.

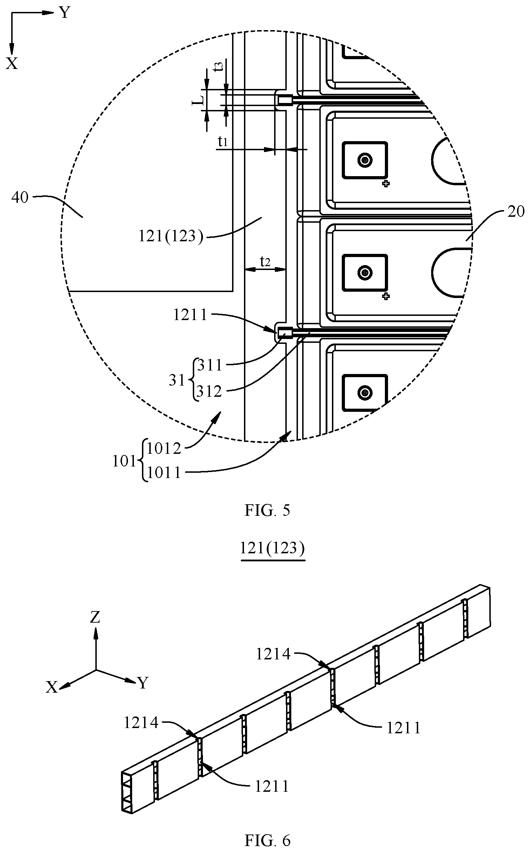

Referring to FIGs. 4 to 6 together, FIG. 4 is a schematic structural diagram of the battery 1100 shown in FIG. 2 with a case cover 11 removed. FIG. 5 is a partially enlarged view of the portion A in FIG. 4. FIG. 6 is a schematic structural diagram of a first side beam 121 according to some embodiments of the present application.

In some embodiments of the present application, a battery 1100 is provided. The battery 1100 includes a case 10, a heat exchange assembly 30, and at least one battery cell 20. The case 10 includes a plurality of first side beams 121, and the plurality of first side beams 121 are connected and define, in an enclosing manner, a first accommodating cavity 1011; the at least one battery cell 20 is located in the first accommodating cavity 1011; the heat exchange assembly 30 is located in the first accommodating cavity 1011, and the heat exchange assembly 30 includes at least one heat exchange member 31 configured to exchange heat with the battery cell 20; at least one first side beam 121 is provided with an accommodating groove 1211, and the at least one heat exchange member 31 is at least partially accommodated in the accommodating groove 1211.

The case 10 may refer to a housing structure having the first accommodating cavity 1011. The battery cell 20 and the heat exchange assembly 30 are accommodated in the first accommodating cavity 1011, and the case 10 serves to protect the battery cell 20 and the heat exchange assembly 30. The case 10 may be of various structures.

As an example, the case 10 may include a lower case body 12 and a case cover 11. The lower case body 12 and the case cover 11 are lidded with each other, and the lower case body 12 and the case cover 11 jointly define the first accommodating cavity 1011. The lower case body 12 may be of a hollow structure with one end open, and the case cover 11 may be of a plate-shaped structure. The open side of the lower case body 12 is lidded with the case cover 11, such that the lower case body 12 and the case cover 11 jointly define the first accommodating cavity 1011. Both the lower case body 12 and the case cover 11 may also be of hollow structures with one side open, and the open side of the case cover 11 is lidded with the open side of the lower case body 12. Certainly, the case 10 formed by the lower case body 12 and the case cover 11 may be of various shapes, such as a cylinder or a rectangular parallelepiped.

In some examples, the case 10 includes the first side beams 121, and the plurality of first side beams 121 are connected and define, in an enclosing manner, the first accommodating cavity 1011. That is, the plurality of first side beams 121 may form a peripheral side wall of the first accommodating cavity 1011 after being connected. The first side beam 121 may be a side wall on one side of the first accommodating cavity 1011. In the case that the lower case body 12 is of a hollow structure with one end open, and the case cover 11 is of a plate-shaped structure, a side wall on one side of the lower case body 12 forms the first side beam 121; in the case that both the lower case body 12 and the case cover 11 are of hollow structures with one side open, the side wall of the lower case body 12 and a side wall corresponding to the case cover 11 jointly form the first side beam 121. The first side beam 121 may be of a profile structure, a sheet metal structure, a die-cast structure, or the like.

The heat exchange assembly 30 may refer to a heat exchange component located in the first accommodating cavity 1011, the heat exchange assembly 30 includes at least one heat exchange member 31, and the heat exchange member 31 may refer to a component that exchanges heat with the battery cell 20. The heat exchange assembly 30 may include one or more heat exchange members 31. A first heat exchange channel 3121 may be disposed inside the heat exchange member 31, and a heat exchange medium flows in the first heat exchange channel 3121, thereby achieving the heat exchange of the battery cell 20. In the case that the temperature of the heat exchange medium is higher than the temperature of the battery cell 20, the heat exchange member 31 heats the battery cell 20; in the case that the temperature of the heat exchange medium is lower than the temperature of the battery cell 20, the heat exchange member 31 cools the battery cell 20. In this way, the temperature control of the battery cell 20 is achieved, such that the battery cell 20 has better charging and discharging performance. The heat exchange member 31 may be of a plate-shaped structure or a tubular structure. The heat exchange medium may be, but is not limited to, water, air, coolant liquid, and the like.

The at least one first side beam 121 is provided with an accommodating groove 1211, and the at least one heat exchange member 31 is at least partially accommodated in the accommodating groove 1211. It can be understood that there may be one or more first side beams 121 provided with the accommodating groove 1211, and one first side beam 121 may be provided with one or more accommodating grooves 1211. The accommodating groove 1211 may refer to a groove structure configured to accommodate the heat exchange member 31, and one accommodating groove 1211 can accommodate one or more heat exchange members 31. The heat exchange member 31 may be partially located in the accommodating groove 1211, or the heat exchange member may be entirely located in the accommodating groove 1211.

As an example, with reference to FIGs. 2 and 4, there are four first side beams 121, and the four first side beams 121 are connected and define, in an enclosing manner, the first accommodating cavity 1011. Two of the first side beams 121 are located on opposite sides of the case 10 in the width direction of the battery 1100 and extend in the length direction of the battery 1100, and the other two first side beams 121 are located on opposite sides of the case 10 in the length direction of the battery 1100 and extend in the width direction of the battery 1100. The first side beam 121 extending in the width direction of the battery 1100 is provided with a plurality of accommodating grooves 1211, and the plurality of heat exchange members 31 may be inserted into the accommodating grooves 1211 in a one-to-one correspondence manner. Certainly, in other examples, the first side beam 121 in the length direction of the battery 1100 may also be provided with one or more accommodating grooves 1211.

In the battery 1100 according to the embodiments of the present application, the battery cell 20 and the heat exchange assembly 30 are located in the first accommodating cavity 1011 defined, in an enclosing manner, by the plurality of first side beams 121 of the case 10. The heat exchange member 31 of the heat exchange assembly 30 can exchange heat with the battery cell 20, thereby achieving the heat exchange of the battery cell 20. In addition, the at least one heat exchange member 31 is at least partially accommodated in the accommodating groove 1211 of the first side beam 121, which can save the internal space of the case 10, help improve the space utilization rate of the battery 1100, and improve the structural compactness of the battery 1100, thereby improving the volumetric energy density of the battery 1100.

In some embodiments, the battery 1100 further includes a busbar component 50, and the plurality of battery cells 20 are connected in parallel, in series, or in series-parallel via the busbar component 50. The busbar component 50 may be, but is not limited to, a conductive member such as a copper bar or an aluminum bar.

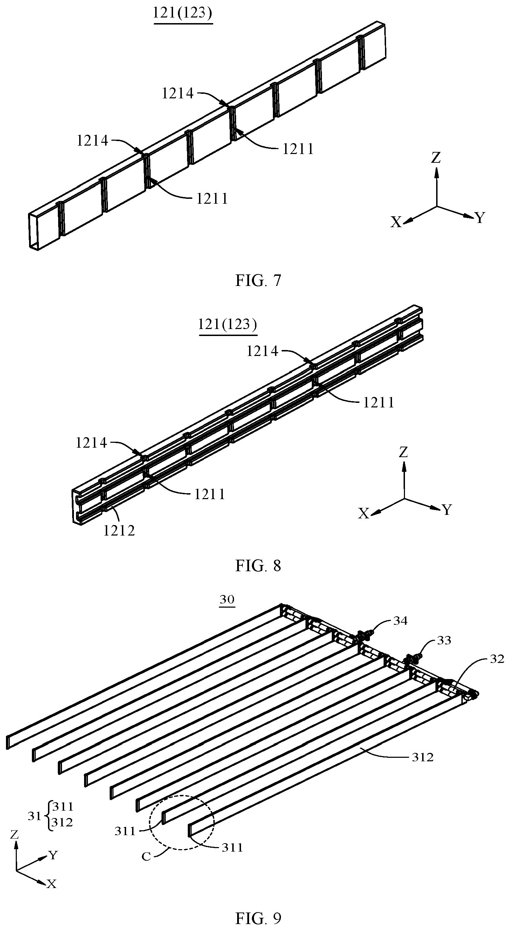

Referring to FIG. 7 or 8 together, FIG. 7 is a schematic structural diagram of a first side beam 121 according to some other embodiments of the present application. FIG. 8 is a schematic structural diagram of a first side beam 121 according to yet some other embodiments of the present application.

The first side beam 121 shown in FIGs. 6, 7, and 8 has a height direction, a width direction, and a length direction. The height direction of the first side beam 121 is parallel to the height direction of the battery 1100, the width direction of the first side beam 121 is parallel to the length direction of the battery 1100, and the length direction of the first side beam 121 is parallel to the width direction of the battery 1100. The first side beam 121 is provided with the plurality of accommodating grooves 1211, and the plurality of accommodating grooves 1211 are spaced apart in the length direction of the first side beam 121, so as to be assembled with the plurality of heat exchange members 31.

In some other embodiments of the present application, a surface of the first side beam 121 facing the heat exchange member 31 is recessed in a direction facing away from the heat exchange member 31 to form the accommodating groove 1211.

It can be understood that the accommodating groove 1211 may refer to a recessed structure on the surface of the first side beam 121 facing the heat exchange member 31. In one example, with reference to FIG. 7, in the case that the first side beam 121 is of a sheet metal structure, the accommodating groove 1211 may be formed by pressing the surface of the sheet metal, which simplifies the manufacturing of the first side beam 121. In another example, with reference to FIG. 8, in the case that the first side beam 121 is of a die-cast structure, a structure corresponding to the accommodating groove 1211 may be disposed in a die-casting mold, such that the first side beam 121 formed by a die-casting process is inherently provided with the accommodating groove 1211 without requiring subsequent processing, thereby facilitating the manufacture of the first side beam 121.

By adopting the technical solution of the embodiments, the surface of the first side beam 121 is recessed to form the accommodating groove 1211, such that the accommodating groove 1211 is provided with a groove bottom wall, and the first side beam 121 exhibits good structural strength, thereby improving the structural strength of the battery 1100. In addition, the accommodating groove 1211 uses and adopts a recessed manner, which simplifies the manufacturing method, thereby facilitating the utilization of the internal space of the first side beam 121, saving the internal space of the battery 1100, and improving the volumetric energy density of the battery 1100.

In one example, with reference to FIG. 6, in the case that the first side beam 121 is of a profile structure, the accommodating groove 1211 is manufactured by mechanically removing material, which simplifies the manufacturing method and lowers the manufacturing cost.

In some other embodiments of the present application, with reference to FIG. 6, the accommodating groove 1211 penetrates through the first side beam 121 in the height direction of the first side beam 121; or one end of the accommodating groove 1211 in the height direction of the first side beam 121 is provided with a groove opening 1214 configured to allow the heat exchange member 31 to be inserted into the accommodating groove 1211, and another end of the accommodating groove 1211 in the height direction of the first side beam 121 is provided with a supporting surface configured to support the heat exchange member 31.

In a possible embodiment, the accommodating groove 1211 penetrates through the first side beam 121 in the height direction of the first side beam 121, and groove openings 1214 are formed on two opposite end surfaces of the first side beam 121 in the height direction of the first side beam 121. The two groove openings 1214 are in communication with two ends of the accommodating groove 1211, respectively, so as to facilitate the insertion of the heat exchange member 31 into the accommodating groove 1211 from the groove opening 1214, thereby improving the convenience of the assembly of the heat exchange member 31 and the first side beam 121.

In yet another possible embodiment, one end of the accommodating groove 1211 in the height direction of the first side beam 121 is provided with the groove opening 1214 configured to allow the heat exchange member 31 to be inserted into the accommodating groove 1211, and another end of the accommodating groove 1211 in the height direction of the first side beam 121 is provided with a supporting surface configured to support the heat exchange member 31. The accommodating groove 1211 extends from the one end of the first side beam 121 to the other end of the first side beam 121 in the height direction of the first side beam 121, but does not penetrate through the first side beam 121, and the accommodating groove 1211 is formed with the groove opening 1214 at the one end of the first side beam 121 and the supporting surface is formed at the other end of the first side beam, such that the heat exchange member 31 can be inserted into the accommodating groove 1211 from the groove opening 1214 and supported on the supporting surface, thereby facilitating the assembly of the heat exchange member 31 and the first side beam 121. The accommodating groove 1211 does not penetrate through the first side beam 121, and the first side beam 121 exhibits good structural strength, thereby helping improve the structural strength of the battery 1100.

By adopting the technical solution of the embodiments, the heat exchange member 31 can be inserted into the accommodating groove 1211 from the groove opening 1214 at one end of the accommodating groove 1211, and the assembly operation of the heat exchange member 31 and the first side beam 121 is simple, thereby helping improve the production efficiency of the battery 1100.

In some other embodiments of the present application, with reference to FIG. 8, the surface of the first side beam 121 facing the heat exchange member 31 is provided with a reinforcing rib 1212, and the accommodating groove 1211 is at least partially disposed on the reinforcing rib 1212.

The reinforcing rib 1212 may refer to a protruding structure formed on the surface of the first side beam 121. There may be one or more reinforcing ribs 1212. The reinforcing rib 1212 may extend in the height direction of the first side beam 121 or may extend in the length direction of the first side beam 121. In the case that the reinforcing rib 1212 extends in the length direction of the first side beam 121, a plurality of reinforcing ribs 1212 may be spaced apart in the height direction of the first side beam 121; in the case that the reinforcing rib 1212 extends in the height direction of the first side beam 121, the plurality of reinforcing ribs 1212 may be spaced apart in the length direction of the first side beam 121.

The accommodating groove 1211 is at least partially disposed on the reinforcing rib 1212. It can be understood that the entire accommodating groove 1211 is located on the reinforcing rib 1212; that is, the groove depth of the accommodating groove 1211 is less than or equal to a protruding height of the reinforcing rib 1212 protruding from the first side beam 121. Alternatively, the accommodating groove 1211 is partially disposed on the reinforcing rib 1212; that is, the groove depth of the accommodating groove 1211 is greater than the protruding height of the reinforcing rib 1212 protruding from the first side beam 121.

By adopting the technical solution of the embodiments, the reinforcing rib 1212 can enhance the structural strength of the first side beam 121, thereby improving the structural strength of the case 10 and thus improving the structural strength and the use reliability of the battery 1100.

In some other embodiments of the present application, with reference to FIG. 5, the groove depth of the accommodating groove 1211 is t₁, and the beam thickness of the first side beam 121 is t₂, where 0 < t₁/t₂ ≤ 2/3.

The groove depth of the accommodating groove 1211 may refer to the distance between a plane where the opening of the accommodating groove 1211 is located and the groove bottom surface of the accommodating groove 1211. The beam thickness of the first side beam 121 may refer to the distance between two opposite surfaces of the first side beam 121 in the thickness direction. A groove depth direction of the accommodating groove 1211 is parallel to the thickness direction of the first side beam 121.

When 0 < t₁/t₂ ≤ 2/3, it can be understood that t₁/t₂ > 0 indicates that the thickness of the first side beam 121 at the accommodating groove 1211 is less than the thickness of the first side beam 121 at other positions, such that the accommodating groove 1211 is formed on the first side beam 121; t₁/t₂ ≤ 2/3 indicates that the accommodating groove 1211 does not penetrate through the first side beam 121, such that the first side beam 121 is not broken; that is, the first side beam 121 has a solid structure at the accommodating groove 1211, and the solid structure can connect portions of the first side beam 121 located on two opposite sides of the accommodating groove 1211.

By adopting the technical solution of the embodiments, with the design of 0 < t₁/t₂ ≤ 2/3, the groove depth of the accommodating groove 1211 is not designed to be too large, such that the first side beam 121 exhibits good structural strength.

In some other embodiments of the present application, with reference to FIG. 5, 02. ≤ t₁/t₂ ≤ 0.5.

t₁/t₂ ≥ 0.2 indicates that the accommodating groove 1211 has a certain depth, such that the accommodating groove 1211 can accommodate the heat exchange member 31, thereby saving the internal space of the battery 1100; t₁/t₂ ≤ 0.5 indicates that the depth of the accommodating groove 1211 is not too deep, such that the first side beam 121 has a certain structural strength, and the battery 1100 exhibits good structural reliability.

By adopting the technical solution of the embodiments, the design of 0.2 < t₁/t₂ ≤ 0.5 enables the heat exchange member 31 to be inserted into the first side beam 121 to a certain depth, which has a good effect of saving the internal space of the battery 1100. In addition, the groove depth of the accommodating groove 1211 is reasonable, thereby enabling the first side beam 121 to better achieve both the space utilization rate inside the battery 1100 and the structural strength of the first side beam 121.

In some embodiments, the value of t₁/t₂ may be, but is not limited to, 0.1, 0.15, 0.2, 0.25, 0.3, 0.35, 0.4, 0.45, 0.5, 0.55, 0.6, 0.65, and 2/3.

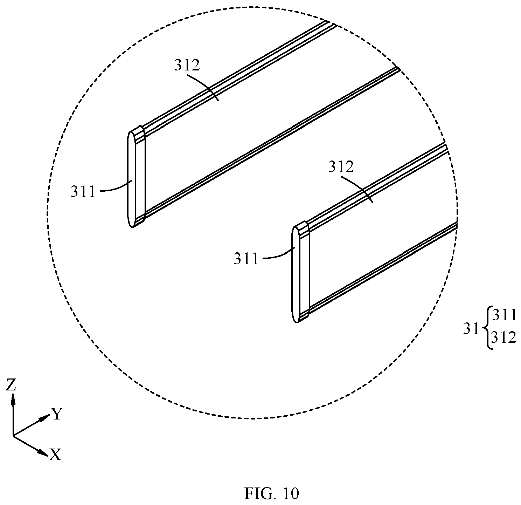

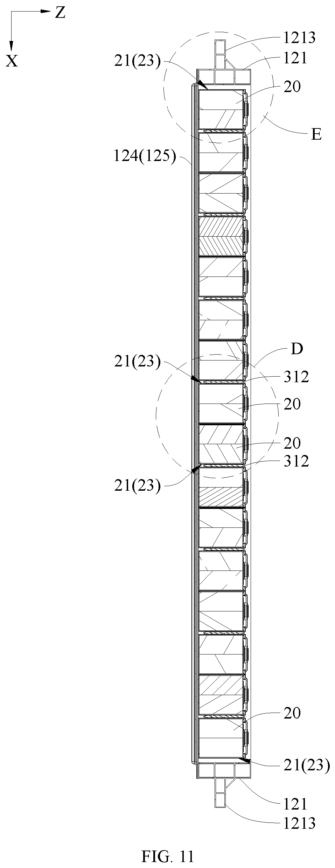

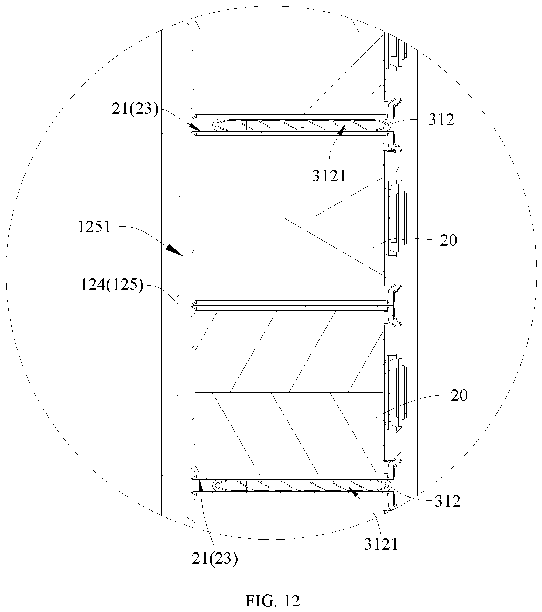

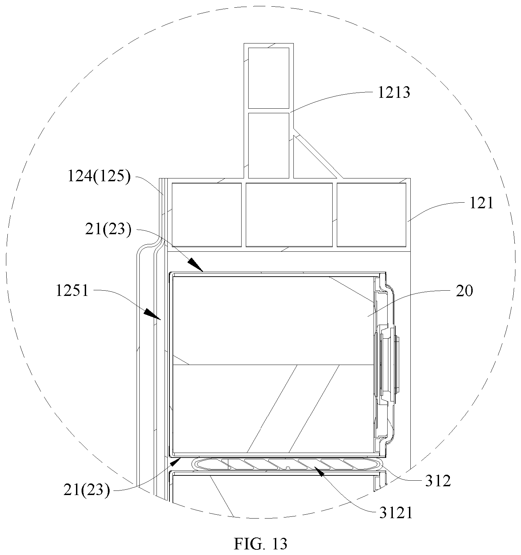

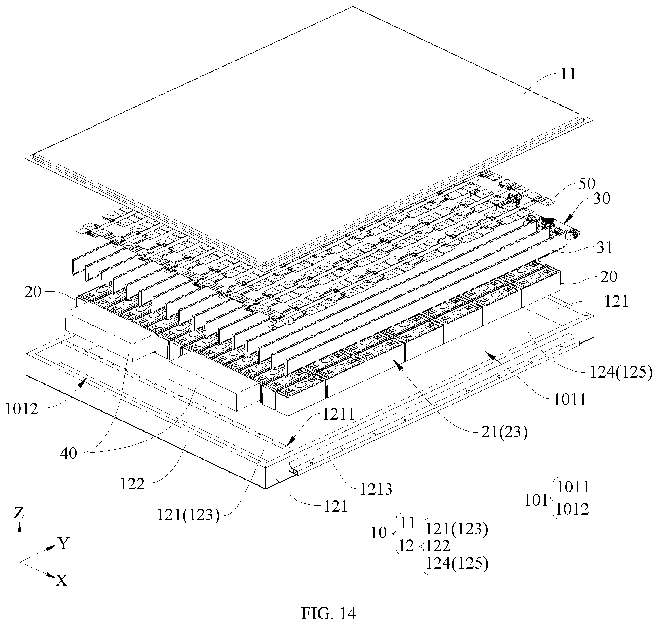

Referring to FIGs. 9 to 14 together, FIG. 9 is a schematic structural diagram of a heat exchange assembly 30 according to some embodiments of the present application. FIG. 10 is a partially enlarged view of the portion C in FIG. 9. FIG. 11 is a cross-sectional view along the line B-B in FIG. 4. FIG. 12 is a partially enlarged view of the portion D in FIG. 11. FIG. 13 is a partially enlarged view of the portion E in FIG. 11. FIG. 14 is a schematic exploded diagram of a battery 1100 according to some other embodiments of the present application.

In some other embodiments of the present application, with reference to FIGs. 9 and 10, the heat exchange member 31 includes a manifold 311 and a heat exchange main body 312 configured to exchange heat with the battery cell 20; in a first direction, one end of the heat exchange main body 312 is connected to the manifold 311; a plurality of first heat exchange channels 3121 are disposed inside the heat exchange main body 312, and the manifold 311 is provided with a communication channel configured to be in communication with the plurality of first heat exchange channels 3121; the manifold 311 is at least partially accommodated in the accommodating groove 1211.

The heat exchange main body 312 may refer to a portion of the heat exchange member 31 configured to exchange heat with the battery cell 20. The heat exchange main body 312 may abut against the battery cell 20 to achieve heat exchange. The plurality of first heat exchange channels 3121 are disposed inside the heat exchange main body 312, and the first heat exchange channel 3121 may refer to a channel configured to allow a heat exchange medium to flow. The heat exchange main body 312 may be provided with two, three, four, or more first heat exchange channels 3121.

The manifold 311 may refer to a component configured to be in communication with the plurality of first heat exchange channels 3121 in the heat exchange main body 312. The communication channel is disposed inside the manifold 311, and the plurality of first heat exchange channels 3121 are connected in series, in parallel, or in series-parallel through the communication channel, such that the heat exchange medium can flow through the plurality of first heat exchange channels 3121. The manifold 311 may be of a shell structure formed with the communication channel, and there may be one, two, three, or more communication channels in the manifold 311, which may be specifically set according to the number of the first heat exchange channels 3121.

One end of the heat exchange main body 312 in the first direction is connected to the manifold 311, the first direction may refer to a length direction of the heat exchange main body 312, and the first direction may also refer to the length direction of the battery 1100; that is, the length direction of the heat exchange main body 312 is parallel to the length direction of the battery 1100. In this way, the heat exchange main body 312 may be set to be long, and the heat exchange area of the heat exchange member 31 is large, which can meet the heat exchange requirements for more battery cells 20.

The manifold 311 is at least partially accommodated in the accommodating groove 1211. It can be understood that a portion of the manifold 311 is located in the accommodating groove 1211 and the other portion is located outside the accommodating groove 1211; or the manifold 311 is entirely located in the accommodating groove 1211.

By adopting the technical solution of the embodiments, the plurality of first heat exchange channels 3121 are disposed inside the heat exchange main body 312, thereby helping improve the heat exchange effect of the heat exchange member 31 and improve the charging and discharging performance of the battery 1100. In addition, the manifold 311 has a simple structure, and the accommodating groove 1211 may also adopt a relatively simple structure, thereby helping simplify the structure of the case 10. The operation of inserting the manifold 311 into the accommodating groove 1211 is simple, thereby helping reduce the manufacturing cost of the battery 1100.

In some other embodiments of the present application, with reference to FIG. 5, a groove width of the accommodating groove 1211 is L, and a thickness of the manifold 311 is t₃, where 1 ≤ L/t₃ ≤ 5.

A groove width direction of the accommodating groove 1211 may refer to the distance between two opposite groove walls of the accommodating groove 1211, and the thickness of the manifold 311 may refer to the distance between two opposite side surfaces of the manifold 311 in the thickness direction. As shown in FIG. 5, the thickness direction of the manifold 311 is parallel to the groove width direction of the accommodating groove 1211, and the groove width direction of the manifold 311 and the thickness direction of the manifold 311 are parallel to the width direction of the heat exchange main body 312.

When 1 ≤ L/t₃ ≤ 5, it can be understood that the design of L/t₃ ≥ 1 enables the groove width of the accommodating groove 1211 to be greater than or equal to the thickness of the manifold 311, such that the manifold 311 can be placed in the accommodating groove 1211, thereby achieving the objective of saving the internal space of the battery 1100; the design of L/t₃ ≤ 5 ensures that the groove width of the accommodating groove 1211 is not designed to be too large, such that the first side beam 121 exhibits good structural strength.

By adopting the technical solution of the embodiments, the design of 1 ≤ L/t₃ ≤ 5 enables the manifold 311 to be smoothly placed into the accommodating groove 1211, such that on the basis of achieving the objective of saving space, the first side beam 121 can also exhibit good structural strength, thereby enabling the battery 1100 to achieve both the volumetric energy density and the use reliability of the battery 1100.

In some other embodiments of the present application, with reference to FIG. 5, 1.2 ≤ L/t₃ ≤ 2.

When 1.2 ≤ L/t₃ ≤ 2, it can be understood that the design of L/t₃ ≥ 1.2 enables the groove width of the accommodating groove 1211 to be greater than the thickness of the manifold 311, such that the manifold 311 can be more easily placed into the accommodating groove 1211, thereby achieving the objective of saving the internal space of the battery 1100; the design of L/t₃ ≤ 2 ensures that the groove width of the accommodating groove 1211 is designed to be reasonable, and the first side beam 121 exhibits good structural strength.

By adopting the technical solution of the embodiments, the design of 1.2 ≤ L/t₃ ≤ 2 enables the manifold 311 to be more smoothly inserted into the accommodating groove 1211, such that on the basis of achieving the objective of saving space, the first side beam 121 can also exhibit good structural strength, thereby enabling the battery 1100 to better achieve both the volumetric energy density and the use reliability of the battery 1100.

In some embodiments, the value of L/t₃ may be, but is not limited to, 1, 1.2, 1.4, 1.6, 1.8, 2, 2.2, 2.4, 2.6, 2.8, 3, 3.2, 3.4, 3.6, 3.8, 4, 4.2, 4.4, 4.6, 4.8, and 5.

In some other embodiments of the present application, with reference to FIGs. 9 and 10, the heat exchange assembly 30 includes a connecting pipe member 32 and the plurality of heat exchange members 31, and the plurality of heat exchange members 31 are arranged in a second direction; in the first direction, the connecting pipe member 32 is connected between end parts of two adjacent heat exchange members 31 distal to the manifold 311, thereby enabling communication between first heat exchange channels 3121 of the two adjacent heat exchange members 31, where the first direction intersects with the second direction.

The connecting pipe member 32 may refer to a pipe member connecting the first heat exchange channels 3121 of two adjacent heat exchange main bodies 312. The first heat exchange channels 3121 of the two adjacent heat exchange members 31 may be connected in series or in parallel by connecting pipe members 32, and the two adjacent heat exchange main bodies 312 may be connected by one or more connecting pipe members 32. As an example, two connecting pipe members 32 are disposed between the two adjacent heat exchange main bodies 312. The heat exchange assembly 30 further includes an inflow pipe 33 and an outflow pipe 34. The inflow pipe 33 is configured to introduce the heat exchange medium outside the battery 1100 into the first heat exchange channel 3121, and the heat exchange medium flowing through the first heat exchange channel 3121 flows out of the battery 1100 through the outflow pipe 34, thereby achieving the heat exchange of the battery cell 20.

The connecting pipe member 32 and the manifold 311 are connected to two opposite ends of the heat exchange main body 312 in the first direction, respectively. The first direction may refer to a distribution direction of the manifold 311 and the connecting pipe member 32, or may refer to the length direction of the heat exchange main body 312. The plurality of heat exchange members 31 are arranged in the second direction, the second direction may refer to an arrangement direction of the plurality of heat exchange members 31, and the first direction intersects with the second direction. With this arrangement, the manifold 311 and the connecting pipe member 32 can be located on two opposite sides of the heat exchange assembly 30 in the first direction, respectively.

As an example, the second direction is perpendicular to the first direction, the second direction may refer to the width direction of the heat exchange main body 312, and the second direction may also refer to the width direction of the battery 1100; that is, the width direction of the heat exchange main body 312 is parallel to the width direction of the battery 1100.

By adopting the technical solution of the embodiments, the manifold 311 and the connecting pipe member 32 are located on the two opposite sides of the heat exchange assembly 30, respectively, and the manifold 311 and the connecting pipe member 32 are arranged separately, thereby facilitating the insertion of the manifold 311 into the accommodating groove 1211 and enabling the assembly operation of the heat exchange assembly 30 and the first side beam 121 to be simpler and more convenient.

In some other embodiments of the present application, with reference to FIGs. 2, 3, 4, 11, and 12, a surface of the battery cell 20 with the largest area is a first surface 21, and the first surface 21 is configured to abut against the heat exchange main body 312.

The first surface 21 may refer to the surface of the battery cell 20 with the largest area.

The first surface 21 is configured to abut against the heat exchange main body 312. It can be understood that the first surface 21 is disposed facing the heat exchange main body 312 and can abut against the heat exchange main body 312. The first surface 21 can directly abut against the heat exchange main body 312, thereby achieving the heat exchange between the battery cell 20 and the heat exchange main body 312. The first surface 21 can also abut against the heat exchange main body 312 through thermally conductive components such as thermally conductive adhesive, thermally conductive sheets, and the like, thereby achieving the heat exchange between the battery cell 20 and the heat exchange main body 312.

As an example, referring to FIGs. 2 and 3, the height direction of the battery cell 20 is parallel to the height direction of the battery 1100, the width direction of the battery cell 20 is parallel to the width direction of the battery 1100, and the length direction of the battery cell 20 is parallel to the length direction of the battery 1100. The first surface 21 of the battery cell 20 is the first side surface 23, and the first side surface 23 abuts against the heat exchange main body 312 of the heat exchange assembly 30; that is, the large surface of the battery cell 20 abuts against the heat exchange main body 312, thereby achieving the heat exchange of the large surface of the battery cell 20. The heat exchange area is large, thereby helping improve the heat exchange effect of the battery 1100 and thus improving the charging and discharging performance of the battery 1100.

By adopting the technical solution of the embodiments, the first surface 21 is the surface with the largest area of the battery cell 20, and the first surface 21 abuts against the heat exchange main body 312. Due to the large areas of the battery cell 20 and the heat exchange main body 312, the heat exchange effect of the battery cell 20 is good, such that the temperature control effect of the battery cell 20 is good, and the charging and discharging effect of the battery 1100 is good. Moreover, in the case that the battery 1100 is under high-rate charge-discharge and high-temperature charging operating conditions, the temperature of the battery cell 20 can be maintained within a suitable operating range, thereby improving the use reliability of the battery 1100 under these operating conditions.

In some other embodiments of the present application, with reference to FIGs. 2 and 14, there are a plurality of battery cells 20, the plurality of battery cells 20 are divided into at least one column of battery cells 20, and the battery cells 20 in each column of the battery cells 20 are arranged in the first direction; the at least one column of the battery cells 20 is disposed between the two adjacent heat exchange members 31.

It can be understood that the plurality of heat exchange members 31 are spaced apart from each other in the second direction, and the at least one column of the battery cells 20 is located in the gap between the two adjacent heat exchange members 31. One or more columns of battery cells 20 may be disposed between the two adjacent heat exchange members 31. Each column of the battery cells 20 may include one or more battery cells 20. In the case that one column of the battery cells 20 includes one battery cell 20, the battery cell 20 is located between the two adjacent heat exchange members 31, and the length direction of the battery cell 20 may be parallel to the first direction, such that the large surface of the battery cell 20 can abut against the heat exchange main body 312 for heat exchange; in the case that one column of the battery cells 20 includes a plurality of battery cells 20, the plurality of battery cells 20 are arranged in the first direction, such that the plurality of battery cells 20 can all exchange heat with the heat exchange main body 312, thereby improving the heat exchange effect of the battery cells 20.

As an example, referring to FIG. 14, one column of battery cells 20 is disposed between the two adjacent heat exchange members 31, and the two adjacent heat exchange members 31 exchange heat with two opposite sides of the battery cell 20, respectively, thereby achieving the double-sided heat exchange of the battery cell 20. Two first surfaces 21 of the battery cell 20 abut against the two heat exchange members 31, respectively, thereby achieving the double-sided heat exchange of large surfaces of the battery cell 20.

In another example, referring to FIGs. 2, 4, and 11, two columns of battery cells 20 are disposed between the two adjacent heat exchange members 31, and side portions of the two columns of the battery cells 20 facing away from each other exchange heat with the two adjacent heat exchange members 31, respectively, thereby achieving the single-sided heat exchange of the battery cells 20. Two large surfaces of the two columns of the battery cells 20 disposed facing away from each other exchange heat with the two adjacent heat exchange members 31, respectively, thereby achieving the single-sided heat exchange of the large surfaces of the battery cells 20. Certainly, in other examples, three, four, five, or more columns of battery cells 20 may be disposed between the two adjacent heat exchange members 31.

By adopting the technical solution of the embodiments, the at least one column of the battery cells 20 is disposed between the two adjacent heat exchange members 31, and the battery cells 20 in each column of the battery cells 20 are arranged in the first direction, such that the battery cells 20 in each column of the battery cells 20 can better exchange heat with the heat exchange main body 312, and the heat exchange effect of the battery cells 20 is good, thereby helping improve the charging and discharging performance of the battery 1100.

In some other embodiments of the present application, with reference to FIG. 12, the surface of the battery cell 20 with the largest area is the first surface 21, and the first surface 21 of at least one battery cell 20 is disposed facing one of the first side beams 121.

The first surface 21 of the at least one battery cell 20 is disposed facing one of the first side beams 121. It can be understood that the first surface 21 of the at least one battery cell 20 is disposed opposite to one of the first side beams 121. The first surfaces 21 of the plurality of battery cells 20 may be disposed facing one of the first side beams 121, or the first surface 21 of one battery cell 20 may be disposed facing one of the first side beams 121, or the first surfaces 21 of the plurality of battery cells 20 may be disposed facing different first side beams 121.

As an example, the first surface 21 of each battery cell 20 in each column of battery cells 20 is disposed facing the first side beam 121 extending in the first direction.

In some cases, in the case that the battery cell 20 is deformed by impact, the allowable degree of deformation of the first surface 21 of the battery cell 20 is larger than that of other surfaces, such that the risk of short circuit due to the compressional deformation of the battery cell 20 is relatively low.

By adopting the technical solution of the embodiments, in the case that the first side beam 121 disposed opposite to the first surface 21 of the battery cell 20 is impacted, the first surface 21 of the battery cell 20 is subjected to the impact, and the risk of short circuit of the battery cell 20 is low, thereby helping improve the use reliability of the battery 1100 under the side impact operating condition.

In some embodiments, in the case that the battery 1100 is mounted on the vehicle 1000, the first surface 21 of the battery cell 20 is disposed facing the door of the vehicle 1000. This can greatly improve the use reliability of the battery 1100 under side-pillar collision and side compression operating conditions. First surfaces 21 of all battery cells 20 in one column of battery cells 20 may be disposed facing the door of the vehicle 1000, or first surfaces 21 of part of battery cells 20 in one column of battery cells 20 may be disposed facing the door of the vehicle 1000.

In some other embodiments of the present application, the surface of the battery cell 20 with the largest area is the first surface 21, and the first surface 21 of at least one battery cell 20 adjacent to the first side beam 121 abuts against the corresponding first side beam 121.

In the battery cell 20 adjacent to the first side beam 121, the first surface 21 of at least one battery cell 20 abuts against the corresponding first side beam 121. It can be understood that in the plurality of battery cells 20 adjacent to the first side beam 121, one or more battery cells 20 may abut against the corresponding first side beam 121. The first surface 21 abutting against the first side beam 121 may mean that the first surface 21 may directly abut against the first side beam 121, or that the first surface 21 abuts against the first side beam 121 through the heat exchange member 31, an insulating member, a buffer member, or the like.

As an example, the first surface 21 of each battery cell 20 in one column of battery cells 20 adjacent to the first side beam 121 extending in the first direction abuts against the first side beam 121.

By adopting the technical solution of the embodiments, during the charging and discharging of the battery cell 20, the first surface 21 of the battery cell 20 exhibits the greatest degree of expansion, and the first surface 21 abuts against the first side beam 121, such that the first side beam 121 can be used to limit the expansion of the first surface 21, thereby improving the charging and discharging performance of the battery cell 20 and thus improving the charging and discharging performance of the battery 1100.

In some other embodiments of the present application, the first side beam 121 abutting against the first surface 21 of the battery cell 20 is provided with a mounting structure 1213 configured to achieve mounting of the battery 1100.

It can be understood that the mounting structure 1213 may refer to a structure provided on the first side beam 121 for securing the battery 1100 to the vehicle 1000. In general, the structural strength of the first side beam 121 provided with the mounting structure 1213 is superior to that of other side beams, so as to achieve stable mounting of the battery 1100. As an example, the mounting structure 1213 may be a mounting beam disposed on the first side beam 121, the mounting beam and the first side beam 121 may be of an integrally formed structure, or the mounting beam may be a separately formed component, and the mounting beam is connected to the first side beam 121 through a connection structure. The mounting beam may be provided with connecting holes, through which a connecting component is connected to the body or frame of the vehicle 1000 to achieve mounting of the battery 1100. The connecting component may be a bolt, a screw, or the like. The mounting beam may be disposed on the first side beam 121 extending in the first direction, and the mounting beam extends in the first direction. With this arrangement, the structural strength of the first side beam 121 provided with the mounting beam can be effectively enhanced.

By adopting the technical solution of the embodiments, the first side beam 121 provided with the mounting structure 1213 exhibits good structural strength, such that the first side beam 121 provided with the mounting structure 1213 can effectively limit the expansion and deformation of the battery cell 20. As a result, an expansion beam and an anti-expansion tie bar in the case 10 can be eliminated, thereby reducing the manufacturing cost of the case 10 and improving the volumetric energy density of the battery 1100.

In some other embodiments of the present application, with reference to FIGs. 2 and 4, the case 10 further includes a second side beam 122, and one first side beam 121 of the plurality of first side beams 121 is a reinforcing beam 123; the first side beams 121 other than the reinforcing beam 123 and the second side beam 122 are connected end to end and define, in an enclosing manner, an accommodating space 101, and the reinforcing beam 123 is located in the accommodating space 101 and divides the accommodating space 101 into the first accommodating cavity 1011 and a second accommodating cavity 1012.

It can be understood that one first side beam 121 located on one side of the first accommodating cavity 1011 is the reinforcing beam 123, two first side beams 121 connected to the reinforcing beam 123 protrude from the reinforcing beam 123 in a direction facing away from the first accommodating cavity 1011, a side beam connected between end parts of the two first side beams 121 facing away from the first accommodating cavity 1011 is the second side beam 122, the second side beam 122, the reinforcing beam 123, and the two first side beams 121 jointly define, in an enclosing manner, the second accommodating cavity 1012, and the first accommodating cavity 1011 and the second accommodating cavity 1012 are disposed side by side.

As an example, there are four first side beams 121, and there is one second side beam 122. One first side beam 121 of the four first side beams 121 is the reinforcing beam 123, and the other three first side beams 121 and the second side beam 122 are connected end to end and define, in an enclosing manner, a rectangular frame structure. Two first side beams 121 of the three first side beams 121 extend in the first direction, the other one first side beam 121 extends in the second direction, the second side beam 122 extends in the second side beam 122, the reinforcing beam 123 is located in the accommodating space 101 formed, in an enclosing manner, by the rectangular frame structure, the reinforcing beam 123 extends in the second direction, and two ends of the reinforcing beam 123 are connected to the first side beams 121 in the first direction, respectively, to divide the accommodating space 101 into the first accommodating cavity 1011 and the second accommodating cavity 1012. Certainly, in other examples, the first side beam 121 and the second side beam 122 may also define, in an enclosing manner, a frame structure of other shapes, which can be set according to the shape and arrangement of the battery cell 20.

By adopting the technical solution of the embodiments, the arrangement of the reinforcing beam 123 can enhance the structural strength of the case 10, thereby helping improve the use reliability of the battery 1100. The first accommodating cavity 1011 is configured to accommodate the battery cell 20, and the second accommodating cavity 1012 can accommodate other components of the battery 1100. The battery cell 20 can be separated from other components by the reinforcing beam 123, which can reduce the risk of damage and short circuit of the battery cell 20 due to interference between other components and the battery cell 20, thereby being more beneficial for improving the use reliability of the battery 1100. The case 10 adopts the structural forms of the first side beam 121, the reinforcing beam 123, and the second side beam 122. This structure is simple and reliable, and allows for the elimination of horizontal and vertical beams inside the first accommodating cavity 1011, so as to provide more space for mounting the battery cell 20, thereby helping improve the volumetric energy density of the battery 1100.

In some other embodiments of the present application, with reference to FIGs. 4 and 5, the reinforcing beam 123 is provided with the accommodating groove 1211.

It can be understood that the accommodating groove 1211 is disposed on the reinforcing beam 123.

By adopting the technical solution of the embodiments, the accommodating groove 1211 is disposed on the reinforcing beam 123 in the case 10, the first side beam 121 of the case 10 facing the outside of the battery 1100 may not be provided with the accommodating groove 1211, and the accommodating groove 1211 is disposed on the reinforcing beam 123, which has little influence on the structural strength of the case 10, such that the case 10 exhibits good structural strength, and the use reliability of the battery 1100 is good.

In some other embodiments of the present application, the battery 1100 further includes a control device 40 configured to control the battery cell 20, and the control device 40 is located in the second accommodating cavity 1012.

The control device 40 may refer to a component configured to control the charging and discharging of the battery cell 20. The control device 40 may be a battery management system (BMS).

By adopting the technical solution of the embodiments, the control device 40 is the second accommodating cavity 1012, and the battery cell 20 and the control device 40 are separated by the reinforcing beam 123. This can reduce the mutual influence between the battery cell 20 and the control device 40, thereby helping improve the use reliability of the battery 1100.

In some other embodiments of the present application, with reference to FIG. 2, the case 10 further includes a covering plate 124. The covering plate 124 is located on one side of the first side beam 121 and closes an opening on one side of the first accommodating cavity 1011.

The covering plate 124 may refer to a plate-shaped component that closes the opening on one side of the first accommodating cavity 1011. The covering plate 124 may close only the opening on one side of the first accommodating cavity 1011, or may close the openings of both the first accommodating cavity 1011 and the second accommodating cavity 1012 located on the same side. The covering plate 124 may be connected to the first side beam 121 by means of a screw joint, snap-fit connection, adhesive connection, or the like.

As an example, in the case that the lower case body 12 is of a hollow structure with one end open and the case cover 11 is of a plate-shaped structure, the covering plate 124 may be the case cover 11, or the covering plate 124 may be a bottom plate of the case cover 11 disposed opposite to the lower case body 12; in the case that both the lower case body 12 and the case cover 11 are of hollow structures with one side open, the covering plate 124 may be a bottom plate of the lower case body 12 disposed opposite to the case cover 11.

By adopting the technical solution of the embodiments, the covering plate 124 closes the opening on one side of the first accommodating cavity 1011, which can reduce the influence of external components on the battery cell 20, thereby helping improve the use reliability of the battery cell 20 and improving the use reliability of the battery 1100.

In some other embodiments of the present application, with reference to FIG. 13, the covering plate 124 is a heat exchange plate 125 configured to exchange heat with the battery cell 20.

It can be understood that the covering plate 124 may refer to the heat exchange plate 125, the heat exchange plate 125 may exchange heat with the battery cell 20, a second heat exchange channel 1251 is disposed inside the heat exchange plate 125, and a heat exchange medium flows in the second heat exchange channel 1251 of the heat exchange plate 125, thereby achieving the heat exchange of the battery cell 20. The heat exchange plate 125 may be of a multi-layer plate-shaped structure, and the second heat exchange channel 1251 is defined, in an enclosing manner, between two layers of plates. The heat exchange plate 125 may also be of a tube sheet structure.

When the temperature of the heat exchange medium in the second heat exchange channel 1251 of the heat exchange plate 125 is higher than the temperature of the battery cell 20, the heat exchange plate 125 heats the battery cell 20; when the temperature of the heat exchange medium in the second heat exchange channel 1251 of the heat exchange plate 125 is lower than the temperature of the battery cell 20, the heat exchange plate 125 cools the battery cell 20. In this way, the heat exchange of the battery cell 20 is achieved. In specific applications, the covering plate 124 may be located at the bottom of the battery cell 20 to achieve heat exchange at the bottom of the battery cell 20, or the covering plate 124 may be located at the top of the battery cell 20 to achieve heat exchange at the top of the battery 1100.

By adopting the technical solution of the embodiments, the covering plate 124 is the heat exchange plate 125, and the heat exchange plate 125 may also exchange heat with the battery cell 20, such that the heat exchange assembly 30 and the covering plate 124 can exchange heat simultaneously with the battery cell 20. The heat exchange area of the battery cell 20 is large, such that the heat exchange effect of the battery cell 20 is good, and the charging and discharging performance of the battery 1100 is good.

In some other embodiments of the present application, with reference to FIG. 2, the case 10 further includes the case cover 11. The case cover 11 is located on the other side of the first side beam 121 and closes an opening on the other side of the first accommodating cavity 1011.

The covering plate 124 and the case cover 11 are located on two opposite sides of the first side beam 121, respectively, and close openings on two opposite sides of the first accommodating cavity 1011, respectively. The case cover 11 may close only an opening on one side of the first accommodating cavity 1011 facing away from the covering plate 124, or may close both the opening on one side of the first accommodating cavity 1011 facing away from the covering plate 124 and an opening on one side of the second accommodating cavity 1012 facing away from the covering plate 124. The case cover 11 may be of a plate-shaped component or of a hollow structure with one side open. The case cover 11 may also exchange heat with the battery cell 20. In this way, the top and bottom of the battery cell 20 can exchange heat simultaneously through the case cover 11 and the covering plate 124, thereby improving the heat exchange effect of the battery cell 20 and improving the charging and discharging performance of the battery cell 20.

By adopting the technical solution of the embodiments, the case cover 11 and the covering plate 124 can close the openings on the two opposite sides of the first accommodating cavity 1011, thereby improving the sealing performance of the case 10 and helping improve the use reliability and the service life of the battery 1100.

The present application will be described below in conjunction with some specific examples.

### Example 1

In this example, with reference to FIGs. 1 to 6 and FIGs. 9 to 13, the battery 1100 includes a case 10, a heat exchange assembly 30, and at least one battery cell 20. The case 10 includes a plurality of first side beams 121, and the plurality of first side beams 121 are connected and define, in an enclosing manner, a first accommodating cavity 1011; the at least one battery cell 20 is located in the first accommodating cavity 1011; the heat exchange assembly 30 is located in the first accommodating cavity 1011, and the heat exchange assembly 30 includes at least one heat exchange member 31 configured to exchange heat with the battery cell 20; at least one first side beam 121 is provided with an accommodating groove 1211, and the at least one heat exchange member 31 is at least partially accommodated in the accommodating groove 1211.

In this example, the case 10 further includes a second side beam 122, and one first side beam 121 of the plurality of first side beams 121 is a reinforcing beam 123; the first side beams 121 other than the reinforcing beam 123 and the second side beam 122 are connected end to end and define, in an enclosing manner, an accommodating space 101, and the reinforcing beam 123 is located in the accommodating space 101 and divides the accommodating space 101 into the first accommodating cavity 1011 and a second accommodating cavity 1012.

In this example, the reinforcing beam 123 is provided with the accommodating groove 1211.

In this example, the battery 1100 further includes a control device 40 configured to control the battery cell 20, and the control device 40 is located in the second accommodating cavity 1012.

In this example, the case 10 further includes a covering plate 124. The covering plate 124 is located on one side of the first side beam 121 and closes an opening on one side of the first accommodating cavity 1011. The openings of both the first accommodating cavity 1011 and the second accommodating cavity 1012 located on the same side are lidded with the covering plate 124.

In this example, the covering plate 124 is a heat exchange plate 125 configured to exchange heat with the battery cell 20.

In this example, the case 10 further includes a case cover 11. The case cover 11 is located on the other side of the first side beam 121 and closes an opening on the other side of the first accommodating cavity 1011. The case cover 11 closes an opening on one side of the first accommodating cavity 1011 facing away from the covering plate 124 and an opening on one side of the second accommodating cavity 1012 facing away from the covering plate 124.

In this example, the accommodating groove 1211 penetrates through the first side beam 121 in a height direction of the first side beam 121.

In this example, the heat exchange member 31 includes a manifold 311 and a heat exchange main body 312 configured to exchange heat with the battery cell 20; in a first direction, one end of the heat exchange main body 312 is connected to the manifold 311; a plurality of first heat exchange channels 3121 are disposed inside the heat exchange main body 312, and the manifold 311 is provided with a communication channel configured to be in communication with the plurality of first heat exchange channels 3121; the manifold 311 is at least partially accommodated in the accommodating groove 1211.

In this example, the heat exchange assembly 30 includes a connecting pipe member 32 and a plurality of heat exchange members 31, and the plurality of heat exchange members 31 are arranged in a second direction; in the first direction, the connecting pipe member 32 is connected between end parts of two adjacent heat exchange members 31 distal to the manifold 311, thereby enabling communication between two adjacent first heat exchange channels 3121, where the first direction intersects with the second direction.

In this example, the battery cell 20 is disposed between heat exchange main bodies 312 of two adjacent heat exchange main bodies 312, a surface of the battery cell 20 with the largest area is a first surface 21, and the first surface 21 is configured to abut against the heat exchange main body 312.

In this example, there are a plurality of battery cells 20, the plurality of battery cells 20 are divided into at least one column of battery cells 20, and the battery cells 20 in each column of the battery cells 20 are arranged in the first direction; the at least one column of the battery cells 20 is disposed between the two adjacent heat exchange members 31.

In this example, the surface of the battery cell 20 with the largest area is the first surface 21, and the first surface 21 of at least one battery cell 20 is disposed facing one of the first side beams 121.

In this example, the surface of the battery cell 20 with the largest area is the first surface 21, and the first surface 21 of at least one battery cell 20 adjacent to the first side beam 121 abuts against the corresponding first side beam 121.

In this example, the first side beam 121 abutting against the first surface 21 of the battery cell 20 is provided with a mounting structure 1213 configured to achieve mounting of the battery 1100.

In this example, the battery 1100 has a height direction, a length direction, and a width direction. The height direction of the battery 1100 may refer to a Z direction, the width direction of the battery 1100 may refer to an X direction, and the length direction of the battery 1100 may refer to a Y direction. The first direction is parallel to the length direction of the battery 1100, and the second direction is parallel to the width direction of the battery 1100.

In this example, there are four first side beams 121, and there is one second side beam 122. One first side beam 121 of the four first side beams 121 is the reinforcing beam 123, and the other three first side beams 121 and the second side beam 122 are connected end to end and define, in an enclosing manner, a rectangular frame structure. Two first side beams 121 of the three first side beams 121 extend in the first direction, the other first side beam 121 extends in the second direction, the second side beam 122 extends in the second direction, the reinforcing beam 123 is located in the accommodating space 101 defined, in an enclosing manner, by the rectangular frame structure, the reinforcing beam 123 extends in the second direction, and two ends of the reinforcing beam 123 are connected to the two first side beams 121 in the first direction, respectively, to divide the accommodating space 101 into the first accommodating cavity 1011 and the second accommodating cavity 1012.

In this example, a height direction of the battery cell 20 is parallel to the height direction of the battery 1100, a width direction of the battery cell 20 is parallel to the width direction of the battery 1100, and a length direction of the battery cell 20 is parallel to the length direction of the battery 1100. The battery cell 20 includes two end surfaces distributed in the height direction thereof, and the height of the battery cell 20 is defined between the two first end surfaces 22. The battery cell 20 includes two first side surfaces 23 distributed in a thickness direction thereof and two second side surfaces 24 distributed in the length direction thereof, the width of the battery cell 20 is defined between the two first side surfaces 23, and the length of the battery cell 20 is defined between the two second side surfaces 24. The area of the two first end surfaces 22 is defined by the length and width of the battery cell 20, the area of the first side surface 23 is defined by the height and length of the battery cell 20, and the area of the second side surface 24 is defined by the height and width of the battery cell 20. For a flat battery cell 20, such as a prismatic battery cell, its width is smaller than its length and height, and its first side surface 23 has the largest area, so the first side surface 23 is also referred to as a large surface. That is, the first surface 21 of the battery cell 20 is the first side surface 23, and the first side surface 23 abuts against the heat exchange main body 312 of the heat exchange assembly 30. In other words, the large surface of the battery cell 20 abuts against the heat exchange main body 312, thereby achieving the heat exchange of the large surface of the battery cell 20. The heat exchange area is large, thereby helping improve the heat exchange effect of the battery 1100 and thus improving the charging and discharging performance of the battery 1100.

In this example, two columns of battery cells 20 are disposed between the two adjacent heat exchange members 31, and side portions of the two columns of the battery cells 20 facing away from each other exchange heat with the two adjacent heat exchange members 31, respectively, thereby achieving the single-sided heat exchange of the battery cells 20.

In this example, first surfaces 21 of one column of battery cells 20 proximal to the first side beam 121 extending in the first direction abut against the corresponding first side beam 121 to limit the expansion and deformation of the battery cells 20.

In this example, the first side beam 121 extending in the first direction is provided with the mounting structure 1213. The mounting structure 1213 may be a mounting beam disposed on the first side beam 121, and the mounting beam extends in the first direction. With this arrangement, the structural strength of the first side beam 121 provided with the mounting beam can be effectively enhanced. The mounting beam and the first side beam 121 may be of an integrally formed structure. The mounting beam may be provided with connecting holes, through which a connecting component is connected to the body or frame of the vehicle 1000 to achieve mounting of the battery 1100. The connecting component may be a bolt, a screw, or the like.

In this example, the reinforcing beam 123 is of a profile structure, the reinforcing beam 123 is provided with a plurality of accommodating grooves 1211, and the plurality of accommodating grooves 1211 are in one-to-one correspondence with manifolds 311 of the plurality of heat exchange members 31.

### Example 2

This example differs from Example 1 in that, with reference to FIG. 7, a surface of the first side beam 121 facing the heat exchange member 31 is recessed in a direction facing away from the heat exchange member 31 to form the accommodating groove 1211.

In this example, the first side beam 121 is of a sheet metal structure.

### Example 3

This example differs from Example 2 in that, with reference to FIG. 8, the surface of the first side beam 121 facing the heat exchange member 31 is provided with a reinforcing rib 1212, and the accommodating groove 1211 is at least partially disposed on the reinforcing rib 1212.

In this example, the first side beam 121 is of a die-cast structure.

### Example 4

This example differs from Example 1 in that, with reference to FIG. 14, one column of battery cells 20 is disposed between the two adjacent heat exchange members 31, and the two adjacent heat exchange members 31 exchange heat with two opposite sides of the battery cell 20, respectively, thereby achieving the double-sided heat exchange of the battery cell 20. Two first surfaces 21 of the battery cell 20 abut against the two adjacent heat exchange members 31, respectively, thereby achieving the double-sided heat exchange of large surfaces of the battery cell 20.

In some other embodiments of the present application, referring to FIG. 1, an electric device is provided. The electric device includes the battery 1100 according to the above embodiments.

In the electric device according to the embodiments of the present application, the above battery 1100 is used. The volumetric energy density of the battery 1100 is large, thereby helping improve the endurance capability and the space utilization rate of the electric device.

In some other embodiments of the present application, referring to FIGs. 1, 2, and 3, the electric device is a vehicle 1000, a surface of the battery cell 20 with the largest area is a first surface 21, and the first surface 21 is disposed facing a door of the vehicle 1000.

The vehicle 1000 has a width direction and a length direction. The length direction of the vehicle 1000 may refer to a distribution direction of front and rear wheels of the vehicle 1000, and the length direction of the vehicle 1000 may refer to a direction indicated by an arrow X₂. The width direction of the vehicle 1000 may refer to a distribution direction of left and right wheels of the vehicle 1000, and the width direction of the vehicle 1000 may refer to a direction indicated by an arrow Y₂.

The door of the vehicle 1000 may refer to a door of the vehicle 1000 used for passenger entry and exit, driving operations, or the like. The door of the vehicle 1000 is generally located on a side portion of the vehicle 1000 in the width direction.

By adopting the technical solution of the embodiments, the first surface 21 is the surface of the battery cell 20 with the largest area, and the first surface 21 is disposed facing the door of the vehicle 1000, such that when the vehicle 1000 experiences a side-pillar collision or a side compression, the first surface 21 is subjected to deformation. Since the first surface 21 allows a significantly greater intrusion than other surfaces of the battery cell 20, the risk of short circuit due to the compressional deformation of the battery cell 20 is relatively low, thereby greatly improving the safety of the battery 1100 under side-pillar collision and side compression operating conditions.

In some other embodiments of the present application, referring to FIGs. 1, 2, 9, and 10, the electric device is the vehicle 1000, a heat exchange assembly 30 includes a plurality of heat exchange members 31 and a connecting pipe member 32, and the heat exchange member 31 includes a manifold 311 and a heat exchange main body 312 configured to exchange heat with the battery cell 20; in a first direction, one end of the heat exchange main body 312 is connected to the manifold 311; a plurality of first heat exchange channels 3121 are disposed inside the heat exchange main body 312, and the manifold 311 is provided with a communication channel configured to be in communication with the plurality of first heat exchange channels 3121; the plurality of heat exchange members 31 are arranged in a second direction; in the first direction, the connecting pipe member 32 is connected between end parts of two adjacent heat exchange members 31 distal to the manifold 311, thereby enabling communication between two adjacent first heat exchange channels 3121; the first direction is parallel to a length direction of the vehicle 1000, where the first direction intersects with the second direction.

It can be understood that the manifold 311 and a connecting assembly are located on two opposite sides of the heat exchange main body 312 in the length direction of the vehicle 1000, respectively. As an example, the manifold 311 is located and disposed proximal to the head of the vehicle 1000, and the connecting pipe member 32 is disposed proximal to the tail of the vehicle 1000; or the manifold 311 is located and disposed proximal to the tail of the vehicle 1000, and the connecting pipe member 32 is disposed proximal to the head of the vehicle 1000.

By adopting the technical solution of the embodiments, the manifold 311 and the connecting assembly are distributed in the length direction of the vehicle 1000, and in the case that the vehicle 1000 experiences a side-pillar collision or a side compression, the risk of damage to the manifold 311 and the connecting pipe member 32 is low, and the risk of liquid leakage is low, thereby effectively reducing the risk of safety accidents and effectively improving the use reliability of the battery 1100.

In some embodiments, the first direction is perpendicular to the second direction, the first direction is parallel to the length direction of the vehicle 1000, the second direction is parallel to the width direction of the vehicle 1000, the plurality of battery cells 20 are divided into a plurality of columns of battery cells 20, the plurality of columns of the battery cells 20 are distributed in the second direction, and the plurality of battery cells 20 in each column of the battery cells 20 are arranged in the first direction; that is, the plurality of battery cells 20 are arranged in a matrix in the length direction of the vehicle 1000 and the width direction of the vehicle 1000. The plurality of heat exchange members 31 in the heat exchange assembly 30 are spaced apart in the second direction, one or two columns of battery cells 20 are disposed between the two adjacent heat exchange members 31, and the manifold 311 and the connecting pipe member 32 are located on two opposite sides of the heat exchange assembly 30 in the first direction, respectively. A large surface of the battery cell 20 abuts against the heat exchange main body 312 to achieve the heat exchange of the large surface of the battery cell 20, such that the battery cell 20 has a high heat exchange effect. The manifold 311 is embedded into an accommodating groove 1211 of a reinforcing beam 123 of the case 10, thereby saving the internal space of the battery 1100 and improving the volumetric energy density of the battery 1100.

The differences between the embodiments above are highlighted in the description of these embodiments, and reference may be made to each other for the identical or similar parts. For brevity, details are not described herein again.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case comprising a plurality of first side beams, the plurality of first side beams being connected and defining, in an enclosing manner, a first accommodating cavity;
at least one battery cell located in the first accommodating cavity; and
a heat exchange assembly located in the first accommodating cavity, the heat exchange assembly comprising at least one heat exchange member configured to exchange heat with the battery cell;
at least one of the first side beams being provided with an accommodating groove, and the at least one heat exchange member being at least partially accommodated in the accommodating groove.

2. The battery according to claim 1, wherein a surface of the first side beam facing the heat exchange member is recessed in a direction facing away from the heat exchange member to form the accommodating groove.

3. The battery according to claim 1 or 2, wherein the accommodating groove penetrates through the first side beam in a height direction of the first side beam;
or one end of the accommodating groove in the height direction of the first side beam is provided with a groove opening configured to allow the heat exchange member to be inserted into the accommodating groove, and another end of the accommodating groove in the height direction of the first side beam is provided with a supporting surface configured to support the heat exchange member.

4. The battery according to any one of claims 1 to 3, wherein the surface of the first side beam facing the heat exchange member is provided with a reinforcing rib, and the accommodating groove is at least partially disposed on the reinforcing rib.

5. The battery according to any one of claims 1 to 4, wherein a groove depth of the accommodating groove is t₁, and a beam thickness of the first side beam is t₂, wherein 0 < t₁/t₂ ≤ 2/3.

6. The battery according to claim 5, wherein 0.2 ≤ t₁/t₂ ≤ 0.5.

7. The battery according to any one of claims 1 to 6, wherein the heat exchange member comprises a manifold and a heat exchange main body configured to exchange heat with the battery cell; in a first direction, one end of the heat exchange main body is connected to the manifold; a plurality of first heat exchange channels are disposed inside the heat exchange main body, and the manifold is provided with a communication channel configured to be in communication with the plurality of first heat exchange channels; the manifold is at least partially accommodated in the accommodating groove.

8. The battery according to claim 7, wherein a groove width of the accommodating groove is L, and a thickness of the manifold is t₃, wherein 1 ≤ L/t₃ ≤ 5.

9. The battery according to claim 8, wherein 1.2 ≤ L/t₃ ≤ 2.

10. The battery according to any one of claims 7 to 9, wherein the heat exchange assembly comprises a connecting pipe member and a plurality of heat exchange members, and the plurality of heat exchange members are arranged in a second direction; in the first direction, the connecting pipe member is connected between end parts of two adjacent heat exchange members distal to the manifold, thereby enabling communication between two adjacent first heat exchange channels, wherein the first direction intersects with the second direction.

11. The battery according to claim 10, wherein there are a plurality of battery cells, the plurality of battery cells are divided into at least one column of battery cells, and the battery cells in each column of the battery cells are arranged in the first direction; the at least one column of the battery cells is disposed between the two adjacent heat exchange members.

12. The battery according to any one of claims 7 to 11, wherein a surface of the battery cell with a largest area is a first surface, and the first surface is configured to abut against the heat exchange main body.

13. The battery according to any one of claims 1 to 12, wherein the surface of the battery cell with the largest area is the first surface, and the first surface of the at least one battery cell is disposed facing one of the first side beams.

14. The battery according to any one of claims 1 to 13, wherein the surface of the battery cell with the largest area is the first surface, and the first surface of the at least one battery cell adjacent to the first side beam abuts against the corresponding first side beam.

15. The battery according to claim 14, wherein the first side beam abutting against the first surface of the battery cell is provided with a mounting structure configured to achieve mounting of the battery.

16. The battery according to any one of claims 1 to 15, wherein the case further comprises a second side beam, and one first side beam of the plurality of first side beams is a reinforcing beam; the first side beams other than the reinforcing beam and the second side beam are connected end to end and define, in an enclosing manner, an accommodating space, and the reinforcing beam is located in the accommodating space and divides the accommodating space into the first accommodating cavity and a second accommodating cavity.

17. The battery according to claim 16, wherein the reinforcing beam is provided with the accommodating groove.

18. The battery according to claim 16 or 17, wherein the battery further comprises a control device configured to control the battery cell, and the control device is located in the second accommodating cavity.

19. The battery according to any one of claims 1 to 18, wherein the case further comprises a covering plate , and the covering plate is located on one side of the first side beam and closes an opening on one side of the first accommodating cavity.

20. The battery according to claim 19, wherein the covering plate is a heat exchange plate configured to exchange heat with the battery cell.

21. The battery according to claim 19 or 20, wherein the case further comprises a case cover, and the case cover is located on the other side of the first side beam and closes an opening on the other side of the first accommodating cavity.

22. An electric device, comprising the battery according to any one of claims 1 to 21.

23. The electric device according to claim 22, wherein the electric device is a vehicle, a surface of a battery cell with a largest area is a first surface, and the first surface is disposed facing a door of the vehicle.

24. The electric device according to claim 22 or 23, wherein the electric device is the vehicle, a heat exchange assembly comprises a plurality of heat exchange members and a connecting pipe member, and the heat exchange member comprises a manifold and a heat exchange main body configured to exchange heat with the battery cell; in a first direction, one end of the heat exchange main body is connected to the manifold; a plurality of first heat exchange channels are disposed inside the heat exchange main body, and the manifold is provided with a communication channel configured to be in communication with the plurality of first heat exchange channels; the plurality of heat exchange members are arranged in a second direction; in the first direction, the connecting pipe member is connected between end parts of two adjacent heat exchange members distal to the manifold, thereby enabling communication between two adjacent first heat exchange channels; the first direction is parallel to a length direction of the vehicle, wherein the first direction intersects with the second direction.
